# EUROPÄISCHE PATENTSCHRIFT

(11) **EP 3 186 568 B1**
(45) Veröffentlichungstag und Bekanntmachung des Hinweises auf die Patenterteilung: **06.10.2021**
(21) Anmeldenummer: 15750651.0
(22) Anmeldetag: 28.07.2015
(51) Int. Cl.: F25B 17/08, F25B 27/02, F25B 30/04, F28D 20/00

(54) **ADSORBEREINRICHTUNG, WÄRMEEINRICHTUNG, KRAFTFAHRZEUG**
ADSORBER APPARATUS, HEATING APPARATUS, MOTOR VEHICLE
DISPOSITIF D'ADSORPTION, DISPOSITIF DE CHAUFFAGE, VÉHICULE AUTOMOBILE

(30) Priorität: 27.08.2014 DE 102014217108
(43) Veröffentlichungstag der Anmeldung: 05.07.2017
(73) Patentinhaber: Robert Bosch GmbH, 70442 Stuttgart (DE); Fahrenheit GmbH, 06126 Halle (DE)
(72) Erfinder: MITTELBACH, Walter, 79111 Freiburg (DE); DIEKMANN, Ralf, 71701 Schwieberdingen (DE); DEMMER, Thomas, 70184 Stuttgart (DE)
(74) Vertreter: Clarenbach, Carl-Philipp
(86) Internationale Anmeldenummer: PCT/EP2015/067279
(87) Internationale Veröffentlichungsnummer: WO 2016/030109

(56) Entgegenhaltungen:
- DE-A1-102012 221 045
- US-A- 2 068 333
- US-A- 2 287 172
- US-A- 5 333 471

## Beschreibung

Die Erfindung betrifft eine Adsorbereinrichtung für eine Wärmeeinrichtung, insbesondere Wärmepumpe oder Wärmespeicher, eines Kraftfahrzeugs, das eine Brennkraftmaschine aufweist, mit einem Gehäuse, in welchem ein Adsorptionsmittel zur Adsorption und Desorption eines Arbeitsmittels vorgesehen ist, und mit wenigstens einem von einem Fluid durchströmbaren Rohr, dass sich durch das Gehäuse hindurch erstreckt und dabei in thermischer Verbindung mit dem Adsorptionsmittel steht.

Ferner betrifft die Erfindung eine Wärmeeinrichtung, insbesondere Wärmepumpe oder Wärmespeicher, für ein Kraftfahrzeug, mit einem Verdampfer, einem Kondensator und mindestens einer Adsorbereinrichtung.

Außerdem betrifft die Erfindung ein Kraftfahrzeug mit wenigstens einer Brennkraftmaschine und mit wenigstens einer Wärmeeinrichtung, insbesondere Wärmepumpe oder Wärmespeicher.

### Stand der Technik

Adsorbereinrichtungen und Wärmeeinrichtungen der eingangs genannten Art sind aus dem Stand der Technik bekannt. Die Offenlegungsschrift DE 10 2011 079 581 A1 offenbart beispielsweise eine Adsorbereinrichtung für eine Wärmepumpe der eingangs genannten Art. In einem Gehäuse sind dazu ein Adsorptionsmittel und mehrere durch das Adsorptionsmittel führende und von einem Fluid durchströmbare Rohre vorgesehen, wobei das Adsorptionsmittel als ein fester Formkörper ausgebildet ist, der das jeweilige Rohr umgreifend an dem jeweiligen Rohr vorgesehen ist.

Aus der Offenlegungsschrift DE 10 2011 079 586 A1 ist außerdem eine Adsorbereinrichtung bekannt, die mit einer Stützstruktur versehen ist, um eine Gehäusewand des Gehäuses abzustützen, um dem in der Adsorbereinrichtung beziehungsweise in dem Gehäuse vorliegenden Unterdruck entgegen zu wirken.

Aus der Offenlegungsschrift US 2,287,172 A ist außerdem bereits ein Kraftfahrzeug mit einer Adsorbereinrichtung mit den Merkmalen des Oberbegriffs des Anspruchs 1 bekannt.

### Offenbarung der Erfindung

Die erfindungsgemäße Adsorbereinrichtung mit den Merkmalen des Anspruchs 1 hat den Vorteil, dass die Adsorbereinrichtung auf einfache Weise auch Kraftfahrzeugen zur Fahrzeugklimatisierung einsetzbar ist, wobei der Adsorbereinrichtung auf Vorteilhafte Art und Weise Wärme zur Desorption zugeführt werden kann. Erfindungsgemäß hierzu vorgesehen, dass dem Gehäuse wenigstens ein Abgasrohr zugeordnet ist, das vom Abgas der Brennkraftmaschine des Kraftfahrzeugs durchströmbar ist. Das Abgas dient somit als Treiber für die Desorption des Arbeitsmittels aus dem Adsorptionsmittel. Dadurch, dass das Abgas in der Regel eine höhere Temperatur aufweist, als ein durch die Rohre hindurchgeführtes Wärmemittel zur Desorption, wird eine vorteilhafte Desorption erreicht, auch dann, wenn die Wärmeübertragung von dem Abgas in das Adsorptionsmittel verlustbehaftet ist. Zur optimalen Ausnutzung der von dem Abgas abzugebenden Wärmeenergie ist ein Hindurchführen des Abgasrohres durch das Gehäuse, insbesondere wenn es dabei in thermischer Verbindung mit dem Adsorptionsmittel steht, von Vorteil. Auf Grund der hohen Temperatur des Abgases ist ein Hindurchführen des Abgases durch das Gehäuse jedoch nicht unbedingt notwendig.

Erfindungsgemäß ist vorgesehen, dass das Abgasrohr an einer Außenseite des Gehäuses zumindest abschnittsweise flächig anliegt. Dadurch, dass das Abgasrohr an der Außenseite des Gehäuses entlanggeführt ist, vereinfacht sich die Konstruktion, wodurch Herstellungskosten reduziert werden. Auf Grund der hohen Abgastemperatur reicht die in das Adsorptionsmittel übertragene Wärme aus, um die Desorption durchzuführen. Durch das flächige Anliegen wird eine besonders effiziente Wärmeübertragung gewährleistet.

Erfindungsgemäß ist vorgesehen, dass das Gehäuse aus Aluminium und das Abgasrohr aus Edelstahl gefertigt ist. Hierdurch
weist das Gehäuse eine besonders gute Wärmeleitfähigkeit auf, und das Abgasrohr ist korrosionsresistent. Das Gehäuse und das Abgasrohr werden somit materialtechnisch auf ihre jeweiligen Funktionen abgestimmt. Auf Grund der hohen Abgastemperatur reicht die geringere Leitfähigkeit des Edelstahls dazu aus, um die Desorption durchzuführen.

Erfindungsgemäß ist außerdem vorgesehen, dass das Abgasrohr an dem Gehäuse unter Zwischenschaltung eines verformbaren Wärmeübertragers anliegt. Der verformbare Wärmeübertrager ist insbesondere dann von Vorteil, wenn, wie zuvor beschrieben, das Gehäuse und das Abgasrohr aus unterschiedlichen Materialien gefertigt sind, die entsprechend unterschiedliche Wärmeausdehnungskoeffizienten aufweisen. Durch den flexiblen beziehungsweise verformbaren Wärmeübertrager wird gewährleistet, dass sich das Gehäuse und das Abgasrohr unterschiedlich verformen können, und dennoch eine vorteilhafte Wärmeübertragung für ein Abgas in das Adsorptionsmittel erfolgt. Gleichzeitig wird die Stabilität und Robustheit der Adsorbereinrichtung gewährleitet.

Vorzugsweise ist der Wärmeübertrager eine Wärmeleitflüssigkeit. Insbesondere kann vorgesehen sein, dass die Wärmeflüssigkeit ein Öl ist. Dadurch ist ein hydraulischer Wärmeübertrager vorgesehen, der sich stets an eine Verformung von Abgasrohr und oder Gehäuse anpassen kann. Zweckmäßigerweise ist dabei außerdem ein Druckspeicher beziehungsweise -Puffer vorgesehen in welchem Wärmeflüssigkeit entweichen kann, wenn beispielsweise der Abstand zwischen Abgasrohr und Gehäuse verringert wird.

Gemäß einer weiteren Ausführungsform der Erfindung ist bevorzugt alternativ oder zusätzlich vorgesehen, dass der Wärmeübertrager ein Drahtgestrick ist, das zwischen dem Abgasrohr und dem Gehäuse liegt. Das Drahtgestrick ist verformbar ausgebildet und kann dadurch den Zwischenraum zwischen Abgasrohr und Gehäuse optimal ausfüllen, wobei es sich an Verformungen von Abgasrohr und Gehäuse anpasst.

Gemäß einer vorteilhaften Weiterbildung der Erfindung ist vorgesehen, dass dem Gehäuse zwei Abgasrohre zugeordnet sind, die jeweils flächig an der Außenseite des Gehäuses anliegen, sodass das Gehäuse von den Abgasrohren an seiner Außenseite zumindest im Wesentlichen umfasst ist. Durch das Vorsehen von zwei Abgasrohren kann erreicht werden, dass das Gehäuse an seinem Außenumfang vollständig oder nahezu vollständig durch die Wärme des Abgases beaufschlagt wird, wodurch eine besonders vorteilhafte Desorption gewährleistet wird. Alternativ zum Vorsehen von zwei oder mehr Abgasrohren, die das Gehäuse an seiner Außenseite umfassen, ist bevorzugt vorgesehen, dass das Abgasrohr einen ringförmigen Querschnitt aufweist und koaxial zu dem Gehäuse verläuft. Dadurch reicht ein Abgasrohr aus, um das Gehäuse vollumfänglich mit der Temperatur des Abgases zu beaufschlagen.

Die erfindungsgemäße Wärmeeinrichtung mit den Merkmalen des Anspruchs 5 zeichnet sich durch die erfindungsgemäße Ausbildung der Adsorbereinrichtung aus. Es ergeben sich hierdurch für die Wärmeeinrichtung die zuvor bereits genannten Vorteile. Vorzugsweise ist dem wenigstens einen Abgasrohr, ein Schaltventil zum Freigeben oder Sperren des Abgasrohres für das Abgas zugeordnet, so dass durch Betätigung des Schaltventils die Adsorbereinrichtung wahlweise mit dem Abgas beziehungsweise mit der Temperatur des Abgases beaufschlagbar ist. Vorzugsweise ist die Wärmeeinrichtung als Wärmepumpe oder als Wärmespeicher ausgebildet.

Das erfindungsgemäße Kraftfahrzeug mit den Merkmalen des Anspruchs 6 weist die erfindungsgemäße Wärmeeinrichtung auf, wobei das Abgasrohr der Adsorbereinrichtung mit der Brennkraftmaschine verbunden ist, sodass das Abgasrohr mit dem Abgas der Brennkraftmaschine durchströmt wird. Es ergeben sich hierdurch die bereits genannten Vorteile. Weitere Merkmale und Vorteile der Erfindung ergeben sich aus den zuvor beschriebenen sowie aus den Ansprüchen.

Im Folgenden soll die Erfindung anhand der Zeichnung erläutert werden. Dazu zeigen im Folgenden:
- Figur 1: eine Wärmeeinrichtung für ein Kraftfahrzeug und
- Figur 2: eine Schnittdarstellung durch eine Adsorbereinrichtung der Wärmeeinrichtung.

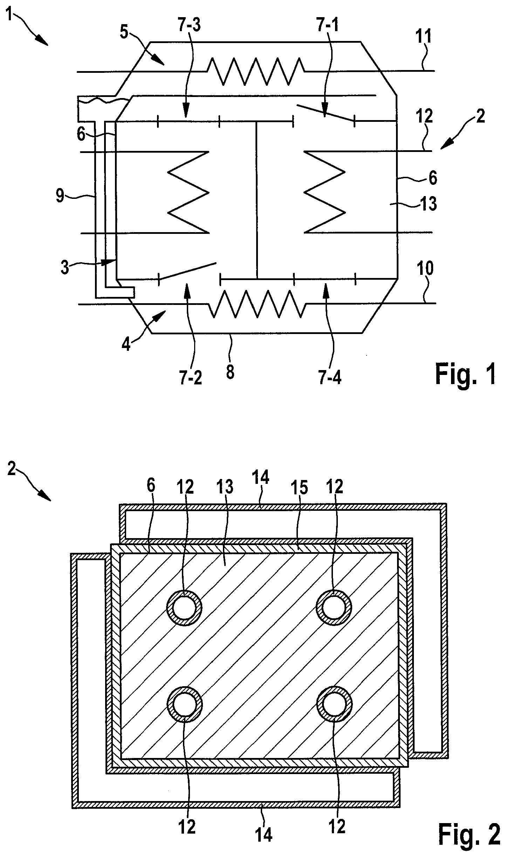

Figur 1 zeigt in einer vereinfachten Schnittdarstellung eine herkömmliche Wärmeeinrichtung 1 für ein Kraftfahrzeug, die als Adsorptionskältemaschine ausgebildet ist. Dazu weist sie zwei Adsorbereinrichtungen 2,3 auf, die identisch ausgebildet und nebeneinander angeordnet sind. Darüber hinaus weist die Wärmeeinrichtung 1 einen Verdampfer 4 sowie einen Kondensator 5 zum Verdampfen beziehungsweise Kondensieren eines Arbeitsmittels der Wärmeeinrichtung 1 auf. Zwischen dem Verdampfer 4 und dem Kondensator 5 sind die beiden Adsorbereinrichtungen 2,3 nebeneinanderliegend angeordnet. Jede der Adsorbereinrichtungen 2,3 weist ein Gehäuse 6 auf, das jeweils zu dem Kondensator 5 und dem Verdampfer 4 hin ein Ventil 7-1,7-2,7-3,7-4 aufweist, durch welches sich die jeweilige Adsorbereinrichtung 2,3 mit dem Verdampfer 4 oder dem Kondensator 5 verbinden lässt.

Verdampfer 4, Kondensator 5 sowie die Adsorbereinrichtungen 2,3 weisen ein gemeinsames Gesamtgehäuse 8 auf, das nach außen verschlossen ist, wobei im Inneren des Gehäuses 8 ein Unterdruck herrscht. Der Kondensator 5 und der Verdampfer 8 sind durch eine Rückflussleitung 9 miteinander verbunden, durch welche kondensiertes Arbeitsmittel von dem Kondensator zu dem Verdampfer fließen kann. Durch den Verdampfer führt außerdem eine Kaltwasserleitung 10, und durch den Kondensator 5 eine Kühlwasserleitung 11. Weiterhin weist jede der Adsorbereinrichtungen 2,3 wenigstens ein Rohr 12 auf, das von einem Fluid durchströmbar ist. Das Rohr verläuft von außerhalb des Gehäuses 6 in das Gehäuse 6 hinein, durch das Gehäuse 6 hindurch und aus dem Gehäuse 6 wieder heraus. In dem Gehäuse 6 ist jeweils ein Adsorptionsmittel 13 vorgesehen, das dazu ausgebildet ist, dass zuvor bereits erwähnte Arbeitsmittel zu adsorbieren und zu desorbieren. Als Adsorptionsmittel wird beispielsweise Silicagel und als Arbeitsmittel Wasser verwendet. Der durch die Wärmeeinrichtung 1 durchgeführte Prozess verläuft diskontinuierlich und geschlossen, wie im Folgenden erläutert werden soll.

In einem ersten Schritt wird an das Adsorptionsmittel 13 angelagerte Arbeitsmittel in der Adsorbereinrichtung 2 unter Wärmezufuhr ausgetrieben. Dazu wird ein Heizwasser durch das Rohr 12 geleitet, das Wärme in das Adsorptionsmittel 13 abgibt und dadurch das Wasser beziehungsweise das Arbeitsmittel desorbiert.

Das desorbierte Arbeitsmittel steigt nach oben, öffnet dadurch das Ventil 7-1 und gelangt in den Kondensator, wo es auf Grund des durch die Kühlwasserleitung 11 geführten Kühlmittels kondensiert und durch die Rückflussleitungen 9 in den Verdampfer gelangt. Vorzugsweise wird es in den Verdampfer 4 eingesprüht und dort bei starkem Unterdruck verdampft. Dabei wird Wärme aus dem durch die Kaltflussleitung 10 geführten Kaltwasser entnommen und dieses dabei auf die gewünschte Temperatur gekühlt. Der entstandene Dampf des Arbeitsmittels (Wasserdampf) steigt durch das Ventil 7-3 in das Gehäuse 6 der Adsorbereinrichtung 3 und wird dort von dem Adsorptionsmittel 13 adsorbiert, die dabei entstehende Wärme wird an das Kühlwasser, das in dem Fall durch das Rohr 12 der Adsorbereinrichtung 3 geführt wird, abgegeben. Ab hier beginnt das Verfahren wieder von vorn, wobei nun die Adsorbereinrichtungen 2,3 vertauscht sind, sodass zunächst in der Adsorbereinrichtung 3 eine Desorption erfolgt. Durch einfaches Umlenken des Heiz- Kühlwasserkreislaufs durch das jeweilige Rohr 12 der Adsorbereinrichtungen 2,3 werden die Funktionen Adsorbieren und Desorbieren am Ende eines Zyklus vertauscht. Insoweit wird die Wärmeeinrichtung 1 also als Wärmepumpe betrieben. Auch ist es denkbar, die Wärmeeinrichtung 1 als Wärmespeicher zu betreiben, wobei dann die Adsorbereinrichtung 2 während einer Fahrt ausgetrieben wird, danach werden die Ventile 7-1 und 7-2 geschlossen. Erst bei einer zu einem späteren Zeitpunkt erfolgenden weiteren Fahrt, wird dann der Wärmepumpeneffekt genutzt und die gespeicherte Wärme "abgerufen".

Figur 2 zeigt eine vorteilhafte Weiterbildung der Wärmeeinrichtung 1, wobei in Figur 2 ein Querschnitt durch die Adsorbereinrichtung 2 gezeigt ist. Das im Folgenden in Bezug auf Figur 2 erläuterte gilt gleichermaßen auch für die Adsorbereinrichtung 3, die identisch zu der Adsorbereinrichtung 2 ausgebildet ist.

Figur 2 zeigt, dass das Rohr 12 mehrfach oder mehrfach gewunden durch das Gehäuse 6 und dabei durch das Adsorptionsmittel 13 verläuft, sodass es in thermischem Kontakt mit dem Adsorptionsmittel 13 steht. Das Gehäuse 6 und das Rohr 12 sind vorliegend aus Aluminium gefertigt, um hohe thermische Wirkungsgrade zu erreichen.

Gemäß der vorteilhaften Weiterbildung ist vorgesehen, dass dem Gehäuse 6 zwei Abgasrohre 14 zugeordnet sind. Die Abgasrohre 14 liegen jeweils an der Außenseite des Gehäuses 6 unter Zwischenschaltung eines Wärmeübertragers 15 an. Dabei sind die Abgasrohre 14 derart ausgebildet, dass sie im Wesentlichen flächig an dem Gehäuse 6 anliegen und dieses nahezu vollumfänglich umgeben/umfassen. Dabei ist es selbstverständlich auch denkbar, dass im Unterschied zu dem vorliegend dargestellten Ausführungsbeispiel das Gehäuse 6 eine von einer rechteckigen Form abweichende Querschnittsform, beispielsweise oval oder kreisförmig, aufweist. Entsprechend sind dazu die Abgasrohre 14 zur flächigen Anlage ausgebildet. Insbesondere kann auch vorgesehen sein, dass die Abgasrohre 14 zusammengefasst zu einem ringförmigen Abgasrohr ausgebildet sind, das koaxial zu dem Gehäuse 6 angeordnet ist, und dieses vollumfänglich umfasst. Die Abgasrohre 14 sind vorliegend aus Edelstahl gefertigt, um den hohen Temperaturen des Abgases standzuhalten und um korrosionsbeständig zu sein.

Bei dem Wärmeübertrager 15 handelt es sich vorzugsweise um eine Wärmeleitflüssigkeit und/oder um ein Drahtgestrick, die in dem Freiraum 14 zwischen dem jeweiligen Abgasrohr 14 und dem Gehäuse 6 angeordnet sind. Auf Grund der Verformbarkeit des Wärmeübertragers 15 ist gewährleistet, dass auch beim Vorliegen unterschiedlicher Wärmeausdehnungsverhältnisse von Abgasrohr 14 und Gehäuse 6 keine Spannungen in den Elementen auftreten und eine Wärmeübertragung weiterhin gewährleistet ist.

Die Abgasrohre 14 sind mit einer nicht dargestellten Brennkraftmaschine des Kraftfahrzeugs verbunden, sodass das Abgas der Brennkraftmaschine durch die Abgasrohre geleitet wird. Die hohe Temperatur des Abgases dringt durch die Wand der Abgasrohre 4, den Wärmeübertrager 15 und die Wand des Gehäuses 6 in das Adsorptionsmittel 13 ein, wodurch adsorbiertes Arbeitsmittel desorbiert wird, wie zuvor bereits geschrieben. Auf Grund der hohen Temperaturen des Abgases kann dabei eine im Vergleich zu herkömmlichen Wärmepumpen vorteilhafte Desorptionswirkung/Leistung erreicht werden, die eine schnelle und vollständige Desorption des adsorbierten Arbeitsmittels gewährleistet.

In der ersten Phase, in welcher die Desorption stattfindet, wird somit Abgas durch die Abgasrohre 14 geleitet, um die Desorption durchzuführen. Auf das Durchleiten von Heizwasser durch das Rohr 12 kann dabei verzichtet werden. Erst in der Adsorptionsphase wird Kühlwasser durch das Rohr 12 durchgeleitet und vorzugsweise der Abgasstrom in den Abgasrohren 14 unterbrochen. Hierzu ist zweckmäßigerweise eine Steuereinheit vorgesehen, die den Abgasstrom sowie den Kühlwasserstrom beziehungsweise Heizstrom steuert oder regelt. Dadurch, dass die Abgasrohre 14 an der Außenseite des Gehäuses 6 angeordnet sind und somit nicht im direkten Kontakt mit dem Adsorptionsmittel 13 stehen, ist die Ausführung der Abgasrohre aus einem Material möglich, dass sich von dem Material der Rohre 12 und des Gehäuses 6 unterscheidet. Der Unterdruckbereich der Adsorbereinrichtungen 2,3 ist stofflich in Kontakt nur mit den Materialien der Adsorberstruktur. Der flexible beziehungsweise verformbare Wärmeübertrager 15 kompensiert dabei die unterschiedlichen mechanischen Wärmeausdehnungskoeffizienten der verwendeten Materialien der Abgasrohre 14 und des Gehäuses 6.

Die Adsorbereinrichtung wird so dimensioniert, dass die im Adsorptionsmittel 13 freiwerdende Adsorptionswärme optimal durch das Fluid, das durch das Rohr 12 strömt, abgeführt werden kann. Der Abstand und die Anzahl von Rohren 12 werden so gewählt, dass eine hohe Rückkühlleistung bei gleichzeitig geringen Temperaturdifferenzen in der Adsorbereinrichtung 2,3 erzielt werden können. Auf Grund der hohen Temperatur des Abgases kann die thermische Anbindung zwischen Abgasrohr 14 und Sorptionsmittel 13 vergleichsweise gering dimensioniert werden, wodurch sich Vorteile bei Materialkosten und Gestaltung ergeben. Vorteilhafterweise wird ein großer mittlerer Abstand zwischen den Abgasrohren 14 vorgesehen, wodurch die Anzahl der mechanisch zu kontaktierenden Abgasrohre 14 an dem Gehäuse 6 gering gehalten werden kann.

## Patentansprüche

1. Adsorbereinrichtung (2,3) für eine Wärmeeinrichtung (1), insbesondere Wärmepumpe oder Wärmespeicher, eines Kraftfahrzeugs, das eine Brennkraftmaschine aufweist, mit einem Gehäuse (6), in welchem ein Adsorptionsmittel (13) zur Adsorption und Desorption eines Arbeitsmittels vorgesehen ist, und mit wenigstens einem von einem Fluid durchströmbaren Rohr (12), das sich durch das Gehäuse (6) erstreckt und dabei in thermischer Verbindung mit dem Adsorptionsmittel (13) steht, wobei dem Gehäuse (6) wenigstens ein Abgasrohr (14) zugeordnet ist, das von dem Abgas der Brennkraftmaschine des Kraftfahrzeuges durchströmbar ist, **dadurch gekennzeichnet, dass** die Adsorbereinrichtung (2,3) einen verformbaren Wärmeübertrager (15) aufweist, und dass das wenigstens eine Abgasrohr (14) an einer Außenseite des Gehäuses (6) zumindest abschnittsweise unter Zwischenschaltung des verformbaren Wärmeübertragers (15) flächig anliegt, und dass das Gehäuse (6) aus Aluminium und das wenigstens eine Abgasrohr (14) aus Edelstahl gefertigt ist.

2. Adsorbereinrichtung nach Anspruch 1, **dadurch gekennzeichnet, dass** der Wärmeübertrager (15) eine Wärmeleitflüssigkeit ist.

3. Adsorbereinrichtung nach Anspruch 1, **dadurch gekennzeichnet, dass** der Wärmeübertrager (15) ein Drahtgestrick ist.

4. Adsorbereinrichtung nach einem der vorhergehenden Ansprüche **dadurch gekennzeichnet, dass** dem Gehäuse (6) zwei Abgasrohre (14) zugeordnet sind, die jeweils zumindest abschnittsweise flächig an der Außenseite des Gehäuses (6) anliegen, sodass das Gehäuse (6) von den Abgasrohren (14) an seiner Außenseite zumindest im Wesentlichen umfasst ist.

5. Wärmeeinrichtung (1), insbesondere Wärmepumpe oder Wärmespeicher, für ein Kraftfahrzeug, mit einem Verdampfer (4), einem Kondensator (5) und mindestens einer Adsorbereinrichtung (2,3), **gekennzeichnet durch** die Ausbildung der Adsorbereinrichtung (2,3) nach einem oder mehreren der vorhergehenden Ansprüche.

6. Kraftfahrzeug mit wenigstens einer Brennkraftmaschine und mit wenigstens einer Wärmeeinrichtung nach Anspruch 5, wobei das wenigstens eine Abgasrohr (14) mit der Brennkraftmaschine verbunden ist.

## Claims

1. An adsorber apparatus (2, 3) for a thermal device (1), in particular a heat pump or a heat accumulator, of an automotive vehicle having an internal combustion engine, with a housing (6) in which an adsorbent (13) for the adsorption and desorption of a working medium is provided, and with at least one tube (12) through which a fluid can flow, the tube extending through the housing (6) and being in thermal communication with the adsorbent (13), wherein at least one exhaust pipe (14) through which the exhaust gas from the internal combustion engine of the automotive vehicle can flow is associated with the housing (6), **characterised in that** the adsorber apparatus (2, 3) has a deformable heat transfer means (15), and **in that** the at least one exhaust pipe (14) at least in certain portions planarly abuts against an outer side of the housing (6) with the deformable heat transfer means (15) interposed, and **in that** the housing (6) is made of aluminium and the at least one exhaust pipe (14) is made of stainless steel.

2. The adsorber apparatus according to claim 1, **characterised in that** the heat transfer means (15) is a heat conducting liquid.

3. The adsorber apparatus according to claim 1, **characterised in that** the heat transfer means (15) is a knitted wire fabric.

4. The adsorber apparatus according to any one of the preceding claims, **characterised in that** two exhaust pipes (14) are associated with the housing (6), which respectively at least in certain portions planarly abut against the outer side of the housing (6) such that the housing (6) is at least substantially surrounded by the exhaust pipes (14) on its outer side.

5. A thermal device (1), in particular a heat pump or a heat accumulator, for an automotive vehicle, with an evaporator (4), a condenser (5) and at least one adsorber apparatus (2, 3), **characterised in that** the adsorber apparatus (2, 3) is configured according to any one or more of the preceding claims.

6. An automotive vehicle with at least one internal combustion engine and with at least one thermal device according to claim 5, wherein the at least one exhaust pipe (14) is connected to the internal combustion engine.

## Revendications

1. Dispositif d'adsorption (2,3) pour un dispositif thermique (1), notamment une thermopompe ou un accumulateur thermique, d'un véhicule automobile ayant un moteur à combustion interne, avec un boîtier (6) dans lequel un adsorbant (13) pour l'adsorption et la désorption d'un moyen de travail est prévu, et avec au moins un tube (12) à travers lequel un fluide peut s'écouler, le tube s'étendant à travers le boîtier (6) en étant en communication thermique avec l'adsorbant (13), dans lequel le boîtier (6) est associé à au moins un tuyau d'échappement (14) à travers lequel le gaz d'échappement du moteur à combustion interne du véhicule automobile peut s'écouler, **caractérisé en ce que** le dispositif d'adsorption (2,3) présente un moyen de transfert de chaleur (15) déformable, et **en ce que** le au moins un tuyau d'échappement (14) au moins dans certaines portions repose à plat contre un côté extérieur du boîtier (6), avec le moyen de transfert de chaleur (15) déformable étant interposé, et **en ce que** le boîtier (6) est fabriqué d'aluminium et le au moins un tuyau d'échappement (14) est fabriqué d'acier inoxydable.

2. Dispositif d'adsorption selon la revendication 1, **caractérisé en ce que** le moyen de transfert de chaleur (15) est un liquide thermoconducteur.

3. Dispositif d'adsorption selon la revendication 1, **caractérisé en ce que** le moyen de transfert de chaleur (15) est un tricoté en fil métallique.

4. Dispositif d'adsorption selon l'une quelconque des revendications précédentes, **caractérisé en ce que** le boîtier (6) est associé avec deux tuyaux d'échappement (14) qui, au moins dans certaines portions, respectivement reposent à plat contre le côté extérieur du boîtier (6), de telle manière que le boîtier (6) est au moins sensiblement entouré sur son côté extérieur par les tuyaux d'échappement (14).

5. Dispositif thermique (1), notamment une thermopompe ou un accumulateur thermique, pour un véhicule automobile, avec un évaporateur (4), un condenseur (5) et au moins un dispositif d'adsorption (2,3), **caractérisé en ce que** le dispositif d'adsorption (2,3) est configuré selon l'une quelconque ou plusieurs des revendications précédentes.

6. Véhicule automobile avec au moins un moteur à combustion interne et avec au moins un dispositif thermique selon la revendication 5, dans lequel le au moins un tuyau d'échappement (14) est relié avec le moteur à combustion interne.
